Europäisches Patentamt

(19) European Patent Office

Office européen des brevets

(11) Veröffentlichungsnummer: **0 324 319 B1**

(12) **EUROPÄISCHE PATENTSCHRIFT**

(45) Veröffentlichungstag der Patentschrift:
13.11.91 Patentblatt 91/46

(51) Int. Cl.⁵: **A21C 9/04**

(21) Anmeldenummer: **88810894.1**

(22) Anmeldetag: **23.12.88**

(54) Vorrichtung zum Beschichten von Teigbändern mit Fett.

Die Akte enthält technische Angaben, die nach dem Eingang der Anmeldung eingereicht wurden und die nicht in dieser Patentschrift enthalten sind.

(30) Priorität: **11.01.88 DE 3800516**

(43) Veröffentlichungstag der Anmeldung:
**19.07.89 Patentblatt 89/29**

(45) Bekanntmachung des Hinweises auf die Patenterteilung:
**13.11.91 Patentblatt 91/46**

(84) Benannte Vertragsstaaten:
**DE ES FR GB IT NL**

(56) Entgegenhaltungen:
EP-A- 0 083 955
DE-C- 1 230 972

(56) Entgegenhaltungen:
FR-A- 2 426 439
GB-A- 804 920
GB-A- 1 232 790
US-A- 2 620 767
US-A- 3 137 591
US-A- 3 885 519

(73) Patentinhaber: **SEEWER AG**
**Heimiswilstrasse 42**
**CH-3400 Burgdorf (CH)**

(72) Erfinder: **Siegenthaler, Peter**
**Kaufdorfstrasse 36**
**CH-3126 Toffen/BE (CH)**
Erfinder: **Zwahlen, Andreas**
**Brünniweg 27**
**CH-3415 Hasle b. Burgdorf (CH)**

(74) Vertreter: **Tschudi, Lorenz et al**
**Bovard AG Patentanwälte VSP**
**Optingenstrasse 16**
**CH-3000 Bern 25 (CH)**

## Beschreibung

Die vorliegende Erfindung betrifft eine Vorrichtung zum Beschichten von Teigbändern mit Fett mit einem Behälter zur Aufnahme von mindestens einem Fettblock, einem Düsenraum und Fördermitteln zum Fördern des Fettes vom Behälter zum Düsenraum, wobei die Fördermittel mit Organen zum Abtragen des Fettes vom Fettblock versehen sind, ein Absteifer zum zumindest teilweisen Entfernen des in den Abtragorganen befindlichen Fettes und zum Zuführen desselben zum Düsenraum vorgesehen ist, und an einem Ende des Düsenraumes eine Düsenöffnung zur Ausgabe eines Fettbandes vorgesehen ist.

Aus der FR-A-2426439 ist eine Vorrichtung zum Bestreichen von Brotscheiben mit Butter vorbekannt. Am Umfang einer Walze 7 sind biegsame Abtragorgane 8 vorgesehen, welche sich nur zum Fördern von sehr weicher Butter von einem Trichter zu einem Austragsspalt eignen. Das Fett kann wegen den biegsamen Abtragorganen auch wieder zum Trichter zurückfliessen. Es kann bei dieser Vorrichtung kein Fett von einer Konsistenz benützt werden, wie es zum Beschichten von Teigbändern benötigt wird. Es können keine dünnen, homogenen Fettbänder erzeugt werden.

Für die Anwendung in der Bäckereibranche müssen an eine Vorrichtung zum Beschichten von Teig mit Fett ganz spezielle Anforderungen gestellt werden. Es müssen Fettarten von sehr unterschiedlicher Festigkeit verarbeitbar sein. Während dem Umformen der Fettblöcke in ein Fettband muss eine optimale Plastifizierung erfolgen. Durch den Umformvorgang darf das Fett nur wenig erwärmt werden, was insbesondere bei der Verwendung von Butter von grosser Wichtigkeit ist. Die Austragmenge muss sehr konstant sein, um ein Fettband mit geringen Gewichtsunterschieden pro Länge zu erhalten. Es sollten dünne, homogene Fettbänder mit einer homogenen Dicke bis hinunter zu ca. 2 mm erhalten werden können.

Es ist deshalb eine Aufgabe der vorliegenden Erfindung, eine Vorrichtung zum Beschichten von Teigbändern mit Fett zu schaffen, welche den vorgenannten Anforderungen genügt. Dies wird erfindungsgemäss dadurch erzielt, dass die Abtragorgane kreissägezahnförmig ausgebildet sind.

Bevorzugte Ausführungsformen der Erfindung ergeben sich aus den abhängigen Ansprüchen.

Die erfindungsgemässe Vorrichtung zum Beschichten von Teigbändern mit Fett weist den Vorteil auf, dass die handelsüblichen Fettwürfel unzerkleinert geladen werden können, wobei die Würfelgrössen nicht einheitlich sind. Es wird vermieden, dass über die Länge der Förderwalze Zwischenräume zwischen den einzelnen Würfeln entstehen. Die Zahnlücken der Förderwalze werden auch bei unterschiedlicher Fettfestigkeit immer vollständig gefüllt. Um auch dünne Fettbänder auspressen zu können, können im Düsenteil beträchtliche Drücke erzeugt werden, wobei vermieden wird, dass das Fett dadurch zurückfliesst. Ansonsten würde keine konstante Förderung erfolgen. Es können sowohl pflanzliche als auch tierische Fette verwendet werden. Durch das hunderprozentige Füllen der Zahnlücken wird ein gleichmässiges Austragen des Fettes, d.h. ein homogenes Fettband erzeugt. Dies wird unter anderem erzielt durch einen einstellbaren Druck auf die Fettblöcke. Der einstellbare Druck ist notwendig, um eine Anpassung an die Fettsorte zu erzielen. Die Zähne am Umfang der Förderwalze sind hinterschnitten, um den Druck auf die Fettblöcke und damit die Temperaturerhöhung des Fettes so klein wie möglich halten zu können. Der in den Zahnlücken nach dem Abstreifen noch verbleibende Fettrest wird beim erneuten Abschälen am Fettblock ausgewechselt, so dass der Hinterschnitt der Zähne voll wirksam ist. Das Fett wird abgeschält, was den Vorteil aufweist, dass eine optimale Plastifizierung erzielt wird.

Im folgenden werden anhand der beiliegenden Zeichnung Ausführungsbeispiele der Erfindung sowie deren Verwendung näher beschrieben. Es zeigen :

Fig. 1 eine Ansicht der Vorrichtung zum Beschichten von Teigbändern mit Fett,

Fig. 2 eine Seitenansicht der Vorrichtung gemäss Fig. 1,

Fig. 3 eine Seitenansicht der Förderwalze mit Absteifer und Düsenteil,

Fig. 4 einen Schnitt gemäss Linie IV-IV der Fig. 3, wobei im oberen Teil der Fig. 4 die Förderwalze nicht dargestellt ist,

Fig. 5 einen Schnitt durch den Abstreifer und den unteren Gehäuseteil der Vorderwand, welche zusammen den Düsenteil bilden,

Fig. 6 eine Seitenansicht der Förderwalze mit Absteifer und Düsenteil einer zweiten Ausführungsform,

Fig. 7 einen Schnitt gemäss Linie VII-VII der Fig. 6, wobei im oberen Teil der Fig. 7 die Förderwalze nicht dargestellt ist.

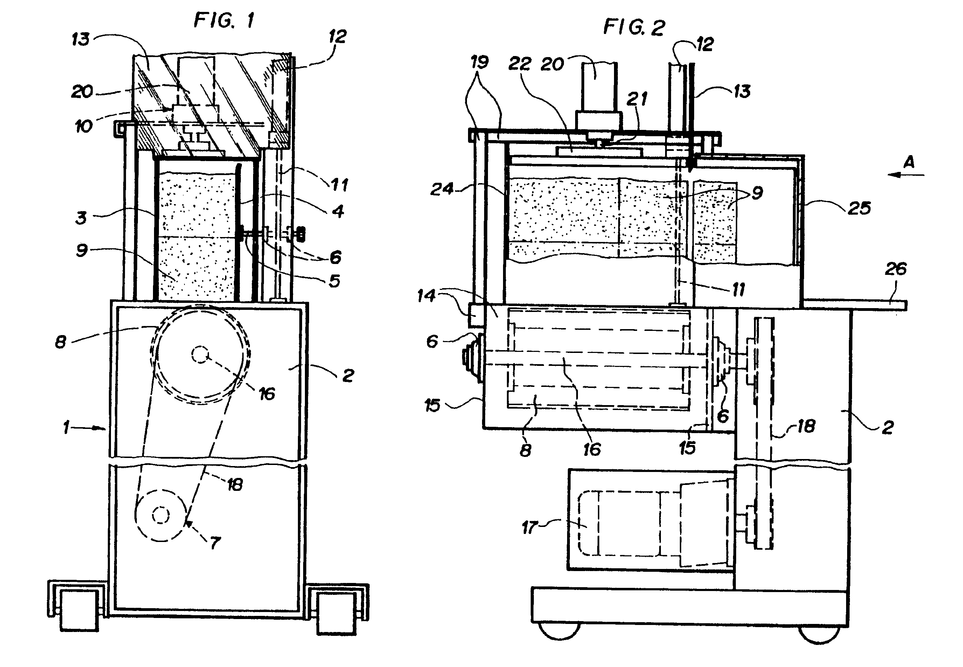

In Fig. 1 ist eine Ansicht der Vorrichtung 1 zum Beschichten von Teigbändern mit Fett von der Bedienungsseite her dargestellt. Auf einem Maschinenständer 2 sind eine feststehende Silowand 3 und eine verschiebbare Silowand 4 aufgebaut. An der Silowand 4 sind Führungsstäbe 5, welche in Lagern 6 schiebbar gelagert sind, angebracht. Ein in dieser Figur schematisch dargestelltes Antriebsaggregat 7 dient zum Antrieb einer in dieser Figur ebenfalls schematisch dargestellten Förderwalze 8. Zwischen den beiden Silowänden 3 und 4 sind ein oder mehrere Fettwürfel 9 vorgesehen, welche mittels einer Presseinrichtung 10 auf die Förderwalze 8 gedrückt werden. Auf dem Maschinenständer 2 ist eine feststehende Kolbenstange 11 vorgesehen, auf welcher ein Pneumatikzylinder 12 vertikal verschiebbar angebracht ist. Der Pneumatikzylinder 12 ist mit einer Messerplatte 13 zum Zurechtschneiden der Fettwürfel verbunden.

In Fig. 2 ist die Vorrichtung 1 zum Beschichten von Teigbändern mit Fett in Produktionsrichtung dargestellt. Am Maschinenständer 2 sind auskragende Tragelemente 14 angebracht, welche Befestigungsplatten 15 tragen, auf welchen die Lager 6 zur Lagerung einer Achse 16 der Förderwalze 8 befestigt sind. Die Förderwalze 8 wird mittels eines Getriebemotors 17 über einen Kettenantrieb 18 angetrieben. Auf den Tragelementen 14 ist ein Joch 19 aufgebaut, welches einen Presszylinder 20 trägt. Auf der Kolbenstange 21 des Zylinders 20 ist eine Pressplatte 22 befestigt, welche die Fettwürfel 9 gegen die Förderwalze 8 presst. Auf dem Joch 19 ist ebenfalls die Kolbenstange 11 sowie der Pneumatikzylinder 12 vorgesehen, welcher die Messerplatte 13 trägt. Die Kolbenstange 11 ist durchgehend durch den Zylinder 12 ausgebildet. Die in Richtung A in das Fettsilo, bestehend aus den Seitenwänden 3 und 4 sowie der Rückwand 24 eingeschobenen Fettwürfel 9 werden mit der Messerplatte 13 auf die gewünschte Länge geschnitten. In Richtung des Pfeiles A wird von Hand oder maschinell ein Druck auf die Fettblöcke ausgeübt, so dass kein Zwischenraum zwischen denselben entsteht, der die Kontinuität des zu bildenden Fettbandes beeinträchtigen würde. Nach dem Schneidvorgang bleibt die Messerplatte 13 in ihrer unteren Stellung und bildet so die Vorderwand des Fettsilos. Eine Schutzeinrichtung 25 wird während dem Einschieben der Fettwürfel 9 nach oben verschoben. Eine Plattform 26 dient zum Einschieben der Fettwürfel.

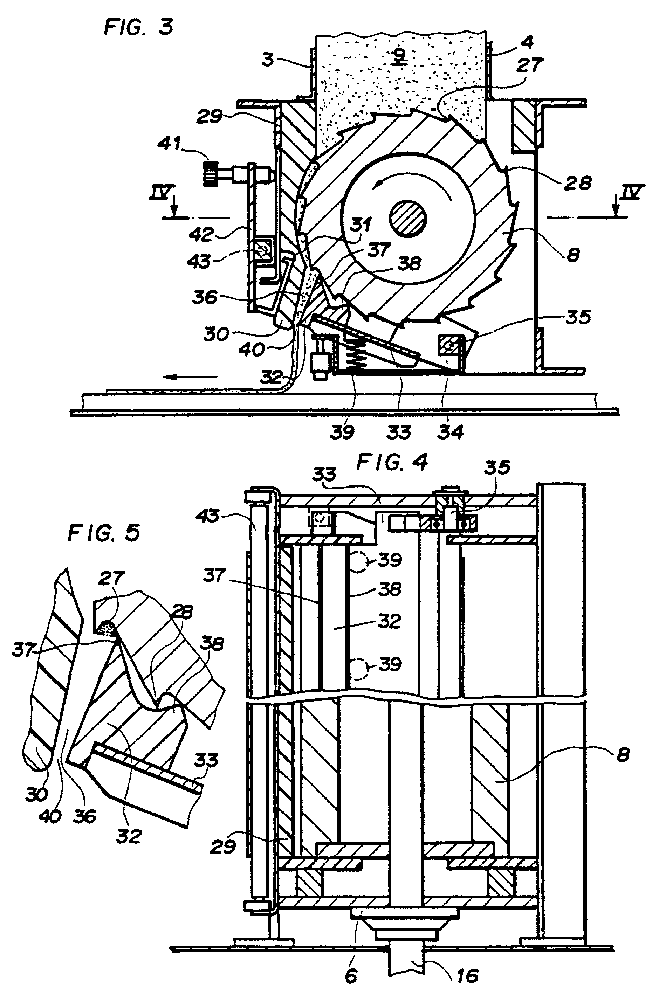

Fig. 3 zeigt eine Seitenansicht der Förderwalze mit Abstreifer und Düsenteil. Die Förderwalze 8 trägt die Fettwürfel 9 ab, so dass sich die am Umfang der Förderwalze 8 vorgesehenen Zahnlücken 27 der kreissägeförmigen Zähne 28 vollständig mit Fett füllen. Ein im Bereich der Förderwalze 8 zylindermantelförmig ausgebildeter Gehäuseteil 29 ist so gestaltet, dass die Zähne 28 der Förderwalze 8 an ihm entlang gleiten und so das geförderte Fettvolumen pro Zahnlücke 27 eindeutig bestimmt ist. Der Gehäuseteil 29 ist auch geeignet, einen Rückfluss von einem Düsenraum 36 her zu verhindern. An einer Uebergangsstelle 31 geht der Gehäuseteil 29 in den Düsenteil 30 über, wobei der Uebergang zur Einstellung der Düse biegsam ausgebildet ist. Ein Abstreifer 32, welcher über eine plattenförmige Verbindung 33 mit Lagerhaltern 34 verbunden ist, welche auf einer Achse 35 drehbar gelagert sind, gleitet über die Förderwalze 8 und entnimmt so das Fett aus den Zahnlücken 27. Der Abstreifer 32 bildet ebenfalls das Gegenstück zum Düsenteil 30, d.h. der Düsenteil 30 und der Abstreifer 32 begrenzen mit der Förderwalze 8 zusammen einen Düsenraum 36, der so klein wie möglich sein sollte. Der Abstreifer 32 weist einen Abstreiferteil 37 und einen Steuerteil 38 auf, welcher geeignet ist, den Abstreifer 32 im geeigneten Moment aus der Zahnlücke 27 gegen die Kraft mehrerer Druckfedern 39 abzusenken. Die am vordern Ende des Düsenteils 30 sowie des Abstreifers 32 gebildete Düsenöffnung 40 kann mittels einer Spindel 41 und einem Hebel 42, welcher auf einer Achse 43 drehbar gelagert ist und auf den Düsenteil 30 einwirkt, verstellt werden.

Die Ausbildung des Düsenraumes zwischen dem unteren Teil 30 des Gehäuseteils 29 und des Abstreifers 32 weist den Vorteil auf, dass der Trichter zum Ausstossen des Fettbandes nicht zu gross wird. Wenn der Trichter zu gross ausgebildet ist, fliesst das Fett nicht den Wänden entlang und wird nicht homogen gefördert. Es können Turbulenzen entstehen. Das Fett könnte auch in gewissen Bereichen ortfest bleiben und damit ranzig werden. Das Fett wird durch die beschriebene erfindungsgemässe Vorrichtung nur unbedeutend erwärmt und optimal plastifiziert durch die Düsenöffnung 40 gefördert.

In Fig. 4 ist ein Schnitt gemäss Linie IV-IV der Fig. 3 dargestellt, wobei im oberen Teil der Fig. 4 die Förderwalze 8 nicht eingezeichnet ist.

In Fig. 5 sind der untere Düsenteil 30 des Gehäuseteils 29 und der Abstreifer, welche zusammen den Düsenraum 36 und die Düsenöffnung 40 bilden, im Detail dargestellt. Durch die kreissägezahnähnliche Form der Zähne an der Walze wird ein optimaler Mitnahmeeffekt erzeugt, der zum Ziel hat, die einzelnen Zahnlücken hundertprozentig mit Fett zu füllen. Es soll ein gleichmässiges Austragen des Fettes über die ganze Düsenbreite erzielt werden, damit das auf dem Teigband abgelagerte Fettband homogen ist, immer die gleiche Dicke und keine Lufteinschlüsse aufweist. Das in der Zahnlücke 27 verbleibende Fett wird beim nächsten Umgang nach vorne gestossen. Der Steuerteil 38 des Abstreifers 32 ist so ausgebildet, dass die Abstreiferspitze 37 über die Zähne 28 gehoben wird.

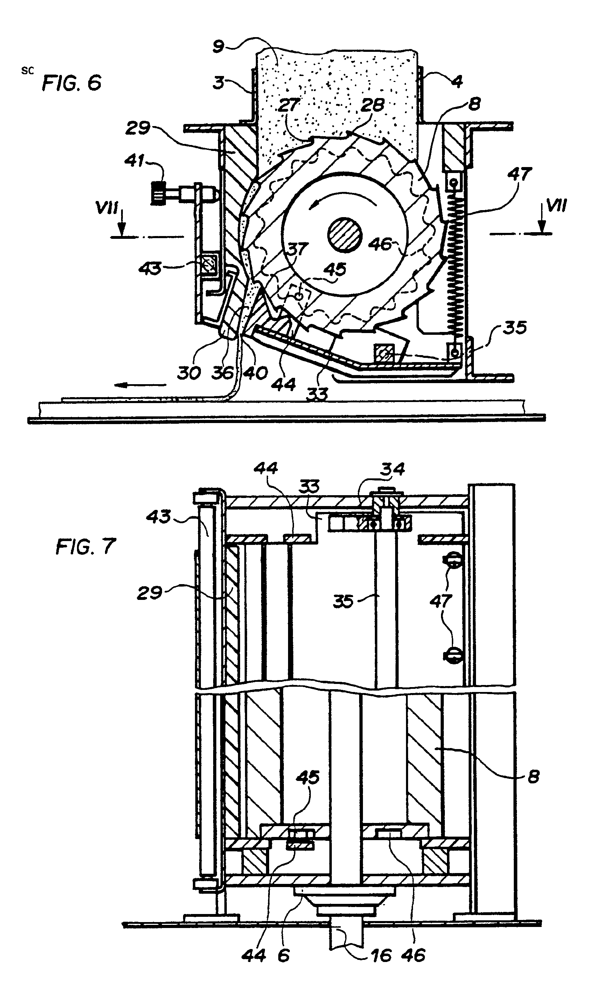

In Fig. 6 ist eine Seitenansicht der Förderwalze mit Abstreifer und Düsenteil eines zweiten Ausführungsbeispiels gemäss der Erfindung dargestellt. Gleich ausgebildete Teile wie beim ersten Ausführungsbeispiel werden mit denselben Bezugszeichen versehen. Im Gegensatz zum ersten Ausführungsbeispiel gemäss den Fig. 1 bis 5 ist lediglich die Steuerung der Abstreiferbewegung anders ausgebildet. An der plattenförmigen Verbindung 33 sind Halter 44 angebracht, welche Rollen 45 tragen, die in stirnseitig der Förderwalze 8 eingefrästen Kurvennuten 46 laufen und so den Abstreiferteil 37 der Zahnlückenform entlang führen, ohne dass der Abstreiferteil 37 gegen die Förderwalze 8 gepresst wird. Es ist eine Zugfeder 47 vorgesehen, damit die Rollen 45 der Kurvenform der Kurvennuten 46 folgen. Die Rollen 45 werden durch die Feder 47 auf die Kurve 46 gezogen.

In Fig. 7 ist ein Schnitt gemäss Linie VII-VII der Fig. 6 dargestellt, wobei im oberen Teil der Fig. 7 die Förderwalze 8 nicht eingezeichnet ist.

Gemäss einer in der Zeichnung nicht dargestellten Ausführungsform könnten die Fördermittel auch als Raupenband ausgebildet sein.

## Patentansprüche

1. Vorrichtung zum Beschichten von Teigbändern mit Fett mit einem Behälter (3, 4, 13, 24) zur Aufnahme von mindestens einem Fettblock, einem Düsenraum (36) und Fördermitteln (7, 8, 27, 28) zum Fördern des Fettes vom Behälter zum Düsenraum (36), wobei die Fördermittel (7, 8, 27, 28) mit Organen (27, 28) zum Abtragen des Fettes vom Fettblock versehen sind, ein Abstreifer (32) zum zumindest teilweisen Entfernen des in den Abtragorganen befindlichen Fettes und zum Zuführen desselben zum Düsenraum (36) vorgesehen ist, und an einem Ende des Düsenraumes (36) eine Düsenöffnung (40) zur Ausgabe eines Fettbandes vorgesehen ist, dadurch gekennzeichnet, dass die Abtragorgane (27, 28) kreissägezahnförmig ausgebildet sind.

2. Vorrichtung nach Patentanspruch 1, dadurch gekennzeichnet, dass die Fördermittel (7, 8, 27, 28) mindestens eine Förderwalze mit an ihrem Umfang angeordneten Organen (27, 28) zum Abtragen des Fettes vom Fettblock umfassen.

3. Vorrichtung nach Patentanspruch 1, dadurch gekennzeichnet, dass der Abstreifer (32) eine Begrenzung des Düsenraumes (36) bildet.

4. Vorrichtung nach Patentanspruch 1 oder 3, dadurch gekennzeichnet, dass der Abstreifer (32) einen vorderen Abstreiferteil (37) zum Entfernen des Fettes aus den Zwischenräumen (27) der Förderwalze und einen hinteren Steuerteil (38) aufweist.

5. Vorrichtung nach einem der Patentansprüche 1, 3 oder 4, dadurch gekennzeichnet, dass der Abstreifer (32) auf einem um eine Achse (35) mittelbar drehbaren Hebel (33) gegen den Druck mindestens eines Federorgans (39) bewegbar angeordnet ist.

6. Vorrichtung nach einem der Patentansprüche 1, 3 oder 4, dadurch gekennzeichnet, dass am Abstreifer (32) oder an einem mit diesem verbundenen Hebel (33) Mittel (44, 45) befestigt sind, welche durch eine an der Förderwalze (8) vorgesehene Steuerkurve (46) geführt sind und die Abstreiferbewegung des Abstreifers (32) bewirken.

7. Vorrichtung nach Patentanspruch 1, dadurch gekennzeichnet, dass ein benachbart zu einem Teil des Umfanges der Förderwalze (8) angeordneter Gehäuseteil (29) an seinem unteren Ende einen Endteil (30) aufweist, welcher eine Begrenzung des Düsenraumes (36) bildet.

8. Vorrichtung nach Patentanspruch 7, dadurch gekennzeichnet, dass der Gehäuseteil (29) an seiner der Förderwalze (8) zugekehrten Seite zylindermantelförmig ausgebildet ist.

9. Vorrichtung nach Patentanspruch 7 oder 8 dadurch gekennzeichnet, dass der untere Teil (30) des Gehäuseteils (29) mittels Einstellorganen (41, 42, 43) verstellbar ausgebildet ist.

10. Vorrichtung nach Patentanspruch 1, dadurch gekennzeichnet, dass eine Behälterwand (13) des Behälters zur Aufnahme des Fettblockes als Messerplatte (13) ausgebildet ist.

11. Vorrichtung nach Patentanspruch 10, dadurch gekennzeichnet, dass die Messerplatte (13) durch ein Zylinder-Kolben-Aggregat (11), 12) in der Höhe verstellbar ausgebildet ist.

12. Vorrichtung nach einem der Patentansprüche 1, 10 oder 11, dadurch gekennzeichnet, dass oberhalb des Behälters zur Aufnahme Fettblockes eine Presseinrichtung (20, 21, 22) zur Ausübung eines einstellbaren Druckes auf den Fettblock vorgesehen ist.

## Claims

1. Device for coating sheets of dough with fat with a container (3, 4, 13, 24) for receiving at least one block of fat, a nozzle space (36) and conveyor means (7, 8, 27, 28) for conveying the fat from the container to the nozzle space (36), the conveyor means (7, 8, 27, 28) being provided with elements (27, 28) to remove the fat from the fat block, there being a stripper (32) to at least partially remove the fat from the fat-removing elements and to convey it to the nozzle space (36), and there being at one end of the nozzle space (36) a nozzle orifice (40) to emit a sheet of fat, characterized in that the fat-removing elements (27, 28) have the shape of circular-saw teeth.

2. Device according to claim 1, characterized in that the conveyor means (7, 8, 27, 28) comprise at least one conveyor roller with elements (27, 28) to remove the fat from the fat block being disposed on its circumference.

3. Device according to claim 1, characterized in that the stripper (32) forms a boundary of the nozzle space (36).

4. Device according to claim 1 or 3, characterized in that the stripper (32) has a front stripping portion (37) to remove the fat from the gaps (27) in the conveyor roller, and a back control portion (38).

5. Device according to one of claims 1, 3 or 4, characterized in that the stripper (32) is disposed on a lever (33) which is indirectly pivotable about a spindle (35) and movable against the bias of at least one spring element (39).

6. Device according to one of claims 1, 3 or 4, characterized in that secured to the stripper (32) or to a lever (33) connected with the latter, are means (44, 45) which are passed through a control curve (46) provided on the conveyor roller (8) and which effect the stripper movement of the stripper (32).

7. Device according to claim 1, characterized in that a housing part (29) disposed adjacent to a part of the circumference of the conveyor roller (8) has at its bottom end a terminal portion (30) which forms a boundary of the nozzle space (36).

8. Device according to claim 7, characterized in that the side of the housing part (29) facing the conveyor roller is cylindrical.

9. Device according to claim 7 or 8, characterized in that the lower portion (30) of the housing part (29) is adjustable by adjusting elements (41, 42, 43).

10. Device according to claim 1, characterized in that one container wall (13) of the container for receiving the block of fat takes the form of a knife plate (13).

11. Device according to claim 10, characterized in that the knife plate (13) is vertically adjustable by means of a cylinder-piston unit (11, 12).

12. Device according to one of claims 1, 10 or 11, characterized in that pressing means (20, 21, 22) are provided above the container for receiving the block of fat, to exert an adjustable pressure on the block of fat.

## Revendications

1. Dispositif pour enduire de graisse des bandes de pâte, muni d'un réservoir (3, 4, 13, 24) pour contenir au moins un bloc de graisse, d'une buse (36), de moyens d'acheminement (7, 8, 27, 28) qui acheminent la graisse du réservoir jusqu'à la buse (36), les moyens d'acheminement (7, 8, 27, 28) étant munis de moyens (27, 28) pour extraire la graisse du bloc de graisse, une section de séparation (32) est prévue pour enlever tout au moins partiellement la graisse se trouvant dans les moyens de retrait ainsi que pour alimenter ladite buse (36), et à une extrémité de la buse (36) un orifice (40) est prévu pour la sortie d'une bande de graisse, ledit dispositif étant caractérisé en ce que les moyens de retrait (27, 28) sont conçus en forme de dents de scie circulaire.

2. Dispositif selon la revendication 1, caractérisé en ce que les moyens d'acheminement (7, 8, 27, 28) comprennent au moins un cylindre de transport avec des moyens (27, 28) disposés sur sa circonférence pour extraire la graisse du bloc de graisse.

3. Dispositif selon la revendication 1, caractérisé en ce que la section de séparation (32) constitue une délimitation de la buse (36).

4. Dispositif selon la revendication 1 ou 3, caractérisé en ce que la section de séparation (32) présente une partie antérieure de dépouille (37) pour enlever la graisse des espacements (27) des cylindres de transport et une partie arrière de commande (38).

5. Dispositif selon une des revendications 1, 3, ou 4, caractérisé en ce que la section de séparation (32) est disposée sur un levier (33) pivotant indirectement autour d'un axe (35) s'appuyant contre la pression d'au moins un moyen de ressort (39) mobile.

6. Dispositif selon une des revendications 1, 3, ou 4, caractérisé en ce que des moyens (44, 45) fixés à la section de séparation (32) ou au levier qui y est connecté (33), sont conduits par une came de commande (46) prévue sur le cylindre de transport (8), causant ainsi le mouvement de la section de séparation (32).

7. Dispositif selon la revendication 1, caractérisé en ce que le boîtier (29) est disposé de façon adjacente à une partie de la circonférence du cylindre de transport (8), et présente à sa partie inférieure une extrémité (30), laquelle forme une délimitation de la buse (36).

8. Dispositif selon la revendication 7, caractérisé en ce que le boîtier (29) forme, sur son côté adjacent au cylindre de transport (8), un corps de cylindre.

9. Dispositif selon la revendication 7 ou 8, caractérisé en ce que la partie inférieure (30) du boîtier (29) est conçue avec un moyen de réglage (41, 42, 43) ajustable.

10. Dispositif selon la revendication 1, caractérisé en ce que une paroi (13) du réservoir constitue un bloc d'appui (13) pour contenir des blocs de graisse.

11. Dispositif selon la revendication 10, caractérisé en ce que la hauteur du bloc d'appui (13) se règle grâce au groupe cylindre-piston (11, 12).

12. Dispositif selon une des revendications 1, 10, ou 11, caractérisé en ce que au-dessus du réservoir qui contient le bloc de graisse, un dispositif de presse (20, 21, 22) est disposé afin d'exercer une pression variable sur le bloc de graisse.

FIG. 2

FIG. 1

FIG. 3

FIG. 4

FIG. 5

SC FIG. 6

FIG. 7